# EUROPÄISCHE PATENTSCHRIFT

(11) **EP 2 464 864 B1**
(45) Veröffentlichungstag und Bekanntmachung des Hinweises auf die Patenterteilung: **25.02.2015**
(21) Anmeldenummer: 10745534.7
(22) Anmeldetag: 12.08.2010
(51) Int. Cl.: F03G 6/00

(54) **SOLARENERGIEANLAGE ZUR INSTALLATION AN BZW. IN GEBÄUDEN**
SOLAR ENERGY SYSTEM FOR INSTALLING ON OR IN BUILDINGS
INSTALLATION D'ÉNERGIE SOLAIRE DESTINÉE À ÊTRE MONTÉE SUR OU DANS DES BÂTIMENTS

(30) Priorität: 13.08.2009 DE 102009037493
(43) Veröffentlichungstag der Anmeldung: 20.06.2012
(73) Patentinhaber: Brosi, Markus, 74321 Bietigheim-Bissingen (DE)
(72) Erfinder: Haberzettl, Matthias, 74321 Bietigheim-Bissingen (DE); BROSI, Markus, 74321 Bietigheim-Bissingen (DE)
(74) Vertreter: Lelgemann, Karl-Heinz
(86) Internationale Anmeldenummer: PCT/EP2010/004929
(87) Internationale Veröffentlichungsnummer: WO 2011/018220

(56) Entgegenhaltungen:
- DE-A1-102006 009 908
- DE-U1-202008 006 592
- GB-A- 2 331 129
- US-A1- 2007 252 391

## Beschreibung

Die Erfindung bezieht sich auf eine Solarenergieanlage zur Installation an bzw. in Gebäuden nach dem Oberbegriff des Patentanspruchs 1.

Solarenergieanlagen kommen häufig auf Hausdächern zum Einsatz. In Zeiten hoher Sonneneinstrahlung, beispielsweise während des Sommers, kann mittels Solarenergieanlagen viel thermische Energie erzeugt werden, wobei im Sommer in den Gebäuden ein vergleichsweise geringer Bedarf an thermischer Energie besteht. Dahingegen kann mittels derartiger Solarenergieanlagen in Zeiten geringer Sonneneinstrahlung, z.B. im Winter, im Vergleich weniger Wärmeenergie erzeugt werden, wobei gerade in diesen Zeiten in den mit derartigen Solarenergieanlagen ausgerüsteten Gebäuden ein vergleichsweise hoher Bedarf an thermischer Energie vorliegt.

Ursächlich hierfür ist die Tatsache, dass die Speicher von Solarenergieanlagen aufgrund des in Gebäuden begrenzten Platzbedarfs häufig nicht so ausgelegt werden können, dass sie auch in Zeiten hoher Sonneneinstrahlung die gesamte im Solarthermiekollektor erzeugte Wärmeenergie aufnehmen können. Die durch die im Speicher realisierbare Wärmeaufnahmekapazität begrenzte Dimensionierung von Solarenergieanlagen hat zur Folge, dass in Zeiten hoher Sonneneinstrahlung das Risiko besteht, dass Schäden an den Solarthermiekollektoren auftreten. Da die in den Solarthermiekollektoren erzeugte thermische Energie in den Speichern nicht mehr gespeichert werden kann, öffnen sich im Bereich der Solarthermiekollektoren vorgesehene Überdruckventile, mit der Folge, dass die üblicherweise Wasser und Frostschutzmittel enthaltende Solarflüssigkeit verdampft, wodurch Überhitzungsschäden an den Absorberflächen der Solarthermiekollektoren auftreten können.

Aus der DE 20 2008 006 592 U1 ist eine Solarenergieanlage zur Installation an bzw. in Gebäuden bekannt, die eine Solarthermiekollektoranlage hat, die am Gebäude installierbar ist. Mittels dieser Solarthermiekollektoranlage ist Sonneneinstrahlung in thermische Energie von Wasser oder eines Glukolgemisches umwandelbar, die als Solarflüssigkeit dienen können. Zur Solarenergieanlage gehört des Weiteren ein Speicher, der mittels eines Fluidkreislaufs an die Solarthermiekollektoranlage angeschlossen ist und über den dann gebäudeseitige Verbraucher mit im Wasser bzw. im Glukolgemisch gespeicherter thermischer Energie versorgt werden können. Des Weiteren gehört zu der bekannten Solarenergieanlage ein Restwärmekraftwerk, das an den Fluidkreislauf zwischen der Solarthermiekollektoranlage und dem Speicher angeschlossen ist. In dem Restwärmekraftwerk kann in der Solarthermiekollektoranlage erzeugte Wärmeenergie, die im Speicher nicht gespeichert werden kann, durch Abkühlung des Wassers bzw. des Glukolgemisches genutzt werden. Hierzu hat das Restwärmekraftwerk einen Repellergenerator mit einem Lüfterrad. Dieser Repellergenerator ist oberhalb eines an den Fluidkreislauf mittels Dreiwegeventilen angeschlossenen Abschnitts des Restwärmekraftwerks angeordnet.

Der Erfindung liegt die Aufgabe zugrunde, die vorstehend geschilderte gattungsbildende Solarenergieanlage zur Installation an bzw. in Gebäuden derart weiterzubilden, dass sie möglichst ohne technisch-konstruktiven Mehraufwand einen erheblich höheren Wirkungsgrad aufweist.

Diese Aufgabe wird erfindungsgemäß durch die Merkmale im kennzeichnenden Teil des Patentanspruchs 1 gelöst. Mittels der erfindungsgemäßen Ausgestaltung des Restwärmekraftwerks sowie der erfindungsgemäßen Anordnung des Harfen- oder Mäanderabschnitts sowie des Lüfterrads des Repellergenerators ergibt sich ein im Vergleich zum Stand der Technik erheblich erhöhter Wirkungsgrad.

Da das Restwärmekraftwerk einen Repellergenerator aufweist, der oberhalb des Harfen- oder Mäanderabschnitts angeordnet ist, der eingangsseitig an ein in einer Solarthermievorlaufleitung des Fluidkreislaufs angeordnetes Dreiwegeventil und ausgangsseitig an ein in einer Solarthermierücklaufleitung des Fluidkreislaufs angeordnetes Dreiwegeventil angeschlossen ist, kann mit einem vergleichsweise geringen technisch-konstruktiven Aufwand sichergestellt werden, dass aktuell nicht speicher- oder verbrauchbare thermische Energie, die im Solarthermiekollektor erzeugt wird, in anderweitig nutzbare Energieformen gewandelt werden kann, wobei gleichzeitig sichergestellt ist, dass irgendwelche Überhitzungsschäden an der Solarenergieanlage ausgeschlossen werden. Die Warmluftströmung innerhalb des Gehäuses des Restwärmekraftwerks, die aufgrund der Erhitzung bodennaher Kaltluft durch den Harfen- oder Mäanderabschnitt erzeugt wird, rotiert das Lüfterrad des Reppellergenerators, wobei die so entstehende Rotationsenergie dann in Nutzenergie umgesetzt werden kann.

Hierzu weist der Repellergenerator vorteilhaft einen Wechselstromgenerator auf, dessen Läuferteil mittels des Lüfterrads rotiert wird und mittels dem elektrische Energie erzeugbar ist, die in ein elektrisches Netz, z.B. in das öffentliche Netz, eingespeist werden kann.

Die Dreiwegeventile, die im Fluidkreislauf der erfindungsgemäßen Solarenergieanlage angeordnet sind, sind vorteilhaft so einstell- bzw. regelbar, dass bei jeder Sonneneinstrahlung und zu jeder Jahreszeit die im Speicher nicht speicherbare bzw. in den gebäudeseitigen Verbrauchern nicht abgerufene thermische Energie der Solarflüssigkeit dem Restwärmekraftwerk zuführbar und damit in eine nutzbare Energieform umwandelbar ist.

Im Folgenden wird die Erfindung anhand einer Ausführungsform unter Bezugnahme auf die Zeichnung näher erläutert.

Es zeigen:
- Figur 1: eine Prinzipdarstellung einer erfindungsgemäßen Solarenergieanlage mit einem Restwärmekraftwerk;
- Figur 2: eine Figur 1 entsprechende Darstellung der erfindungsgemäßen Solarenergieanlage bei inaktivem Restwärmekraftwerk;
- Figur 3: eine Figur 1 entsprechende Darstellung der erfindungsgemäßen Solarenergieanlage bei aktivem Restwärmekraftwerk; und
- Figur 4: eine Darstellung des Funktionsprinzips der erfindungsgemäßen Solarenergieanlage bei aktivem Restwärmekraftwerk.

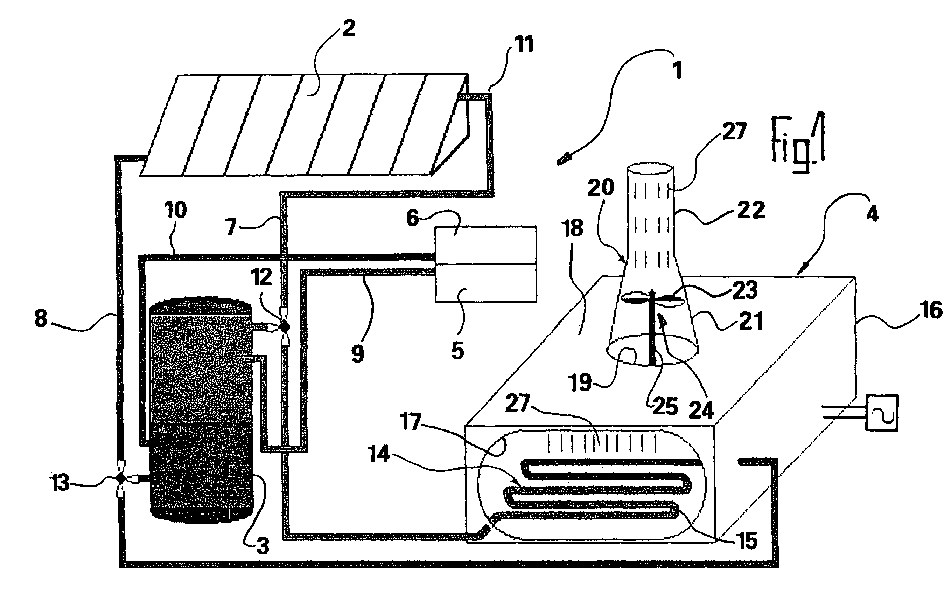

Eine anhand der Figuren 1 bis 4 im Folgenden erläuterte Ausführungsform einer erfindungsgemäßen Solarenergieanlage ist dazu vorgesehen, an bzw. in Gebäuden, wie Einfamilienhäusern od.dgl., installiert zu werden.

Die Solarenergieanlage 1 hat als wesentliche Bestandteile einen Solarthermiekollektor 2, einen Speicher 3 und ein Restwärmekraftwerk 4. An den Speicher 3 sind gebäudeseitige Verbraucher, z.B. eine Warmwasserversorgung 5 und eine Heizanlage 6, angeschlossen.

Der Solarthermiekollektor 2 ist so am in den Figuren nicht dargestellten Gebäude angeordnet, dass er - möglichst optimal - von der Sonne bestrahlt wird. In ihm wird einfallende Strahlungsenergie der Sonne in thermische Energie gewandelt, mit der eine Solarflüssigkeit beladen wird, die im Solarthermiekollektor 2 vorhanden ist bzw. den Solarthermiekollektor 2 durchströmt.

Der Solarthermiekollektor 2 ist ausgangsseitig über eine Solarthermievorlaufleitung mit der Eingangsseite des Speichers 3 verbunden, der seinerseits ausgangsseitig über eine Solarthermierücklaufleitung mit der Eingangsseite des Solarthermiekollektors 2 verbunden ist.

Der Speicher 3 seinerseits ist über eine Heizungsvorlaufleitung 9 im dargestellten Ausführungsbeispiel der Solarenergieanlage 1 an die Warmwasserversorgung 5 und die Heizanlage 6 des Gebäudes angeschlossen. Aus der Warmwasserversorgung 5 bzw. der Heizanlage 6 führt eine Heizungsrücklaufleitung 10 zurück zum Speicher 3. Die Heizungsvorlaufleitung 9 mündet nahe der Solarthermievorlaufleitung 7, die Heizungsrücklaufleitung 10 mündet nahe der Solarthermierücklaufleitung 8 in den Speicher 3.

Im Speicher 3 kann im Solarthermiekollektor 2 mit Wärmeenergie beaufschlagte Solarflüssigkeit gespeichert und bei Bedarf der Heizanlage 6 bzw. der Warmwasserversorgung 5 des Gebäudes zugeführt werden.

In der Solarthermievorlaufleitung 7 ist nahe dem Solarthermiekollektor 2 ein Überdruckventil 11 vorgesehen.

Das Restwärmekraftwerk 4 ist eingangsseitig mittels eines in der Solarthermievorlaufleitung 7 angeordneten Dreiwegeventils 12 und ausgangsseitig mittels eines in der Solarthermierücklaufleitung 8 angeordneten Dreiwegeventils 13 an den. Fluidkreislauf 7, 8 der Solarenergieanlage 1 angeschlossen.

Zu dem Restwärmekraftwerk 4 gehört ein von der Solarflüssigkeit durchströmter Mäanderabschnitt 14, der durch eine Vielzahl aufeinander folgender Leitungsschleifen 15 besteht und der von der Solarflüssigkeit durchströmt wird.

Der Mäanderabschnitt 14 ist innerhalb eines Gehäuses 16 des Restwärmekraftwerks 4 angeordnet, wobei das Gehäuse 16 Gehäuseöffnungen 17 aufweist, von denen in Figur 1 eine dargestellt ist und durch die hindurch bodennahe, vergleichsweise kalte Luft aufgrund des Venturi-Effekts in das Gehäuse 16 eingesaugt wird, wenn das Restwärmekraftwerk 4 in Betrieb ist.

An seiner Deckenwand 18 weist das Gehäuse 16 des Restwärmekraftwerks 4 eine Durchbrechung 19 auf. Auf die Durchbrechung 19 ist ein Kamin 20, der je nach sich aus der installierten Leistung des Restwärmekraftwerks 4 ergebendem Anforderungsprofil auch als Hochtemperaturrohr 20 ausgeführt sein kann, aufgesetzt. Im dargestellten Ausführungsbeispiel hat der Kamin 20 einen sich an die Durchbrechung 19 der Deckenwand 18 anschließenden und sich in aufwärtiger Richtung verjüngenden Trichterabschnitt 21 und einen sich an diesen Trichterabschnitt 21 anschließenden zylindrischen Abschnitt 22. Im Trichterabschnitt 21 des Kamins 20 ist ein Lüfterrad 23 eines Repellergenerators 24 des Restwärmekraftwerks 4 angeordnet. Das Lüfterrad 23 ist mittels einer Welle 25 mit einem in den Figuren nicht gezeigten Läuferteil eines Wechselstromgenerators 26 des Repellergenerators 24 in Antriebsverbindung. Der Wechselstromgenerator 26 kann elektrische Energie z.B. in das öffentliche Netz einspeisen.

Im Gehäuse 16 des Restwärmekraftwerks 4 wird durch die Gehäuseöffnungen 17 in Folge des Venturi-Effekts eingesaugte kalte, bodennahe Luft am Mäanderabschnitt 14 erhitzt, so dass erwärmte bzw. Warmluft 27 aufsteigt und durch den Kamin bzw. das Hochtemperaturrohr 20 aus dem Gehäuse 16 des Restwärmekraftwerks 4 ausströmt. Hierbei wird durch den Warmluftstrom 27 das Lüfterrad 23 des Repellergenerators 24 rotiert. Diese Rotationsenergie wird im Wechselstromgenerator 26 in elektrische Energie umgewandelt.

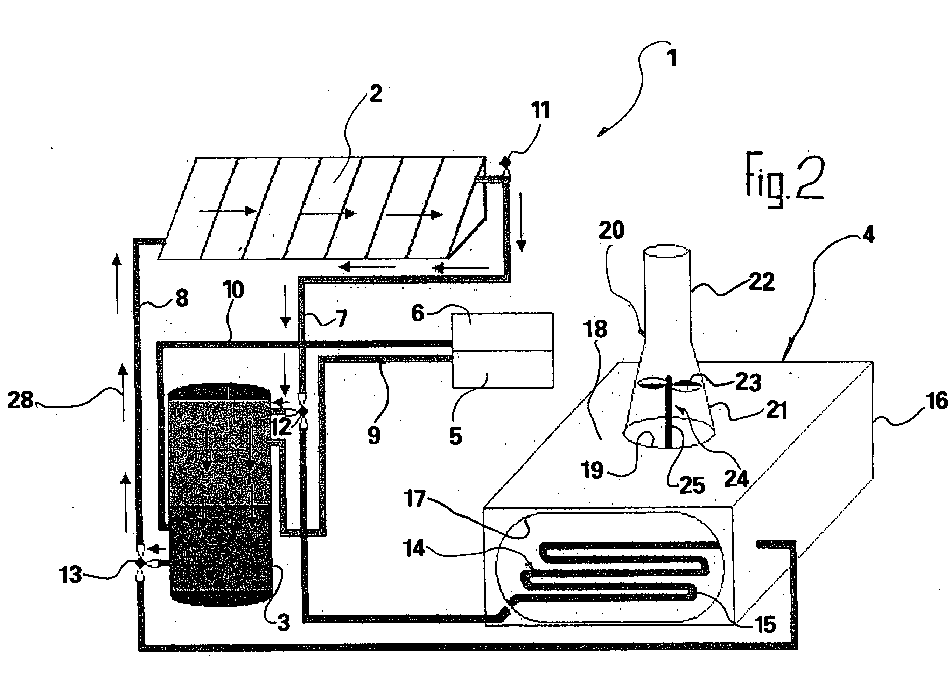

In Figur 2 ist die Solarenergieanlage 1 in einem Betriebszustand dargestellt, in dem, wie sich aus den Pfeilen 28 ergibt, die Solarflüssigkeit im Solarthermiekollektor 2 mit thermischer Energie beaufschlagt wird. Aus dem Solarthermiekollektor 2 strömt die entsprechend aufgeladene Solarflüssigkeit durch die Solarthermievorlaufleitung 7 in den Speicher 3. Aus dem Speicher 3 heraus werden die Warmwasserversorgung 5 und die Heizanlage 6 des Gebäudes durch die Heizungsvorlaufleitung 9 hindurch mit vergleichsweise hochtemperierter Solarflüssigkeit versorgt. Durch die Heizungsrücklaufleitung 10 wird die in ihrer Temperatur abgesenkte Solarflüssigkeit zurück zum Speicher 3 geleitet. Aus dem Speicher 3 gerät die abgekühlte Solarflüssigkeit durch die Solarthermierücklaufleitung 8 erneut zur Eingangsseite des Solarthermiekollektors 2.

Die in Figur 2 gezeigte Betriebsweise der Solarenergieanlage 1 liegt dann vor, wenn die Sonneneinstrahlung auf den Solarthermiekollektor 2 gering ist, d.h. z.B. während des Winters. Bei der in Figur 2 gezeigten Betriebsweise sind die in der Solarthermievorlaufleitung 7 bzw. in der Solarthermierücklaufleitung 8 angeordneten Dreiwegeventile 12 bzw. 13 in einer Stellung, in der das Restwärmekraftwerk 4 nicht an den Fluidkreislauf 7, 8 der Solarenergieanlage 1 angeschlossen ist.

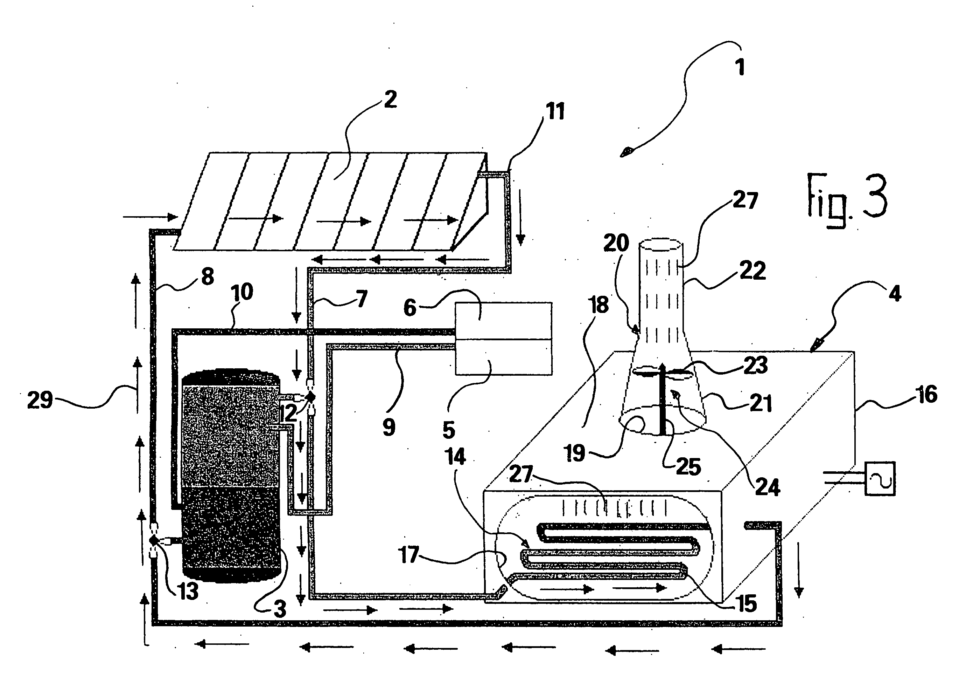

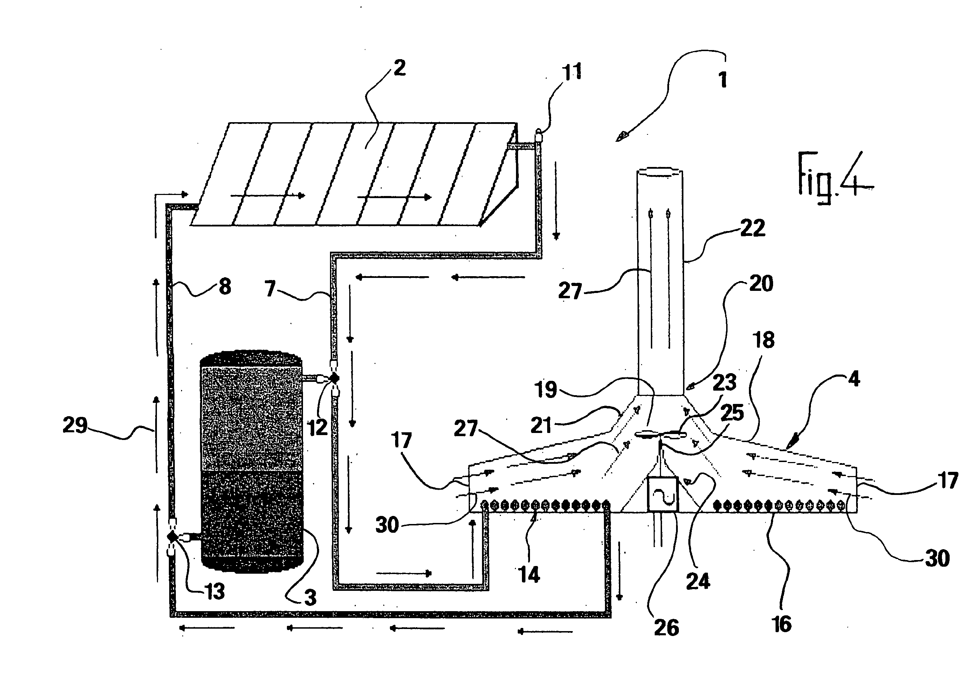

Anhand der Figuren 3 und 4 wird nunmehr eine Betriebsweise der Solarenergieanlage 1 erläutert, bei der, wie sich durch die Pfeile 29 ergibt, der Speicher 3 nicht an den Fluidkreislauf 7, 8 der Solarenergieanlage 1 angeschlossen ist.

Die im Solarthermiekollektor 2 mit thermischer Energie beaufschlagte Solarflüssigkeit strömt durch die Solarthermievorlaufleitung 7 zum im Gehäuse 16 des Restwärmekraftwerks 4 angeordneten Mäanderabschnitt 14. Das in der Solarthermievorlaufleitung 7 angeordnete Dreiwegeventil 12 ist in einer Stellung, in der keine Solarflüssigkeit zum Speicher 3 gelangt.

Die Wärmeenergie der Solarflüssigkeit wird im innerhalb des Gehäuses 16 des Restwärmekraftwerks 4 angeordneten Mäanderabschnitt 14 durch vergleichsweise kalte Bodenluft 30, die aufgrund des Venturi-Effekts durch die Gehäuseöffnungen 17 in das Gehäuse 16 eingesaugt wird, abgekühlt. Die entsprechend erwärmte Luft 27 strömt durch den Kamin 20 bzw. das Hochtemperaturrohr 20 aus dem Gehäuse 16 des Restwärmekraftwerks 4 ab. Hierbei wird durch die Warmluftströmung 27 das Lüfterrad 23 des Repellergenerators 24 rotiert. Diese Rotationsenergie wird mittels der Welle 25 auf das Läuferteil des Wechselstromgenerators 26 übertragen und im Wechselstromgenerator 26 in elektrische Energie umgewandelt, die ihrerseits ausgangsseitig des Wechselstromgenerators 26 in das öffentliche Netz eingespeist werden kann.

Nachdem die Solarflüssigkeit im Mäanderabschnitt 24 abgekühlt worden ist, wird sie durch die Solarthermierücklaufleitung 8 zurück zur Eingangsseite des Solarthermiekollektors 2 geleitet.

In den Figuren 2 bzw. 3 und 4 sind diejenigen Betriebszustände der Solarenergieanlage gezeigt, bei denen sämtliche im Solarthermiekollektor 2 auf die Solarflüssigkeit übertragene Wärmeenergie entweder in den Speicher 3 oder in das Restwärmekraftwerk 4 weitergeleitet wird. Selbstverständlich ist es möglich, in Abhängigkeit von der Sonneneinstrahlung auf den Solarthermiekollektor 2 und den Beladungszustand des Speichers 3 die entsprechenden Stellungen der Dreiwegeventile 12, 13 so zu steuern bzw. zu regeln, dass stets diejenige thermische Energie, die im Speicher 3 aktuell nicht aufnehmbar ist, zum Restwärmekraftwerk 4 geleitet wird.

## Patentansprüche

1. Solarenergieanlage zur Installation an bzw. in Gebäuden, mit einem Solarthermiekollektor (2), der am Gebäude, z.B. auf einem Gebäudedach, installierbar ist und mittels dem Sonneneinstrahlung in thermische Energie von Solarflüssigkeit umwandelbar ist, einem Speicher (3), der mittels eines Fluidkreislaufs (7, 8) an den Solarthermiekollektor (2) angeschlossen ist und mittels dem gebäudeseitige Verbraucher, z.B. eine Heizanlage (6), eine Warmwasserversorgung (5) od.dgl., mit in Solarflüssigkeit gespeicherter thermischer Energie versorgbar sind, und einem Restwärmekraftwerk (4), das an den Fluidkreislauf (7, 8), mittels dem der Solarthermiekollektor (2) und der Speicher (3) verbunden sind, angeschlossen ist, mittels dem im Solarthermiekollektor (2) erzeugte und im Speicher (3) nicht speicherbare Wärmeenergie durch Abkühlung der Solarflüssigkeit nutzbar ist, und das einen Repellergenerator (24) mit einem Lüfterrad (23) aufweist, der oberhalb eines Abschnitts (14) des Restwärmekraftwerks (4) angeordnet ist, der eingangsseitig an ein in einer Solarthermievorlaufleitung (7) des Fluidkreislaufs (7, 8) angeordnetes Dreiwegeventil (12) und ausgangsseitig an ein in einer Solarthermierücklaufleitung (8) des Fluidkreislaufs (7, 8) angeordnetes Dreiwegeventil (13) angeschlossen ist, **dadurch gekennzeichnet, dass** der Abschnitt (14) des Restwärmekraftwerks (4) als Harfen- oder Mäanderabschnitt (14) ausgebildet ist, dass der Harfen- oder Mäanderabschnitt (14) in einem Gehäuse (16) angeordnet ist, dessen Deckenwand (18) eine Durchbrechung, in bzw. nahe der der Repellergenerator (24) angeordnet ist, und Gehäuseöffnungen (17) aufweist, durch die hindurch bodennahe, vergleichsweise kalte Luft aufgrund des Venturi-Effekts in das Gehäuse (16) einsaugbar ist, dass sich an die Durchbrechung (19) der Deckenwand (18) des Gehäuses (16) des Restwärmekraftwerks (4) ein Kamin (20) oder ein Hochtemperaturrohr (20) anschließt, und dass das Lüfterrad (23) des Repellergenerators (24) in einem sich von der Durchbrechung (19) der Deckenwand (18) aus verjüngenden Trichterabschnitt (21) des Kamins (20) bzw. des Hochtemperaturrohres (20) angeordnet ist.

2. Solarenergieanlage nach Anspruch 1, dessen Repellergenerator (24) einen Wechselstromgenerator (26) aufweist.

3. Solarenergieanlage nach Anspruch 1 oder 2, deren Dreiwegeventile (12, 13) so einstell- bzw. regelbar sind, daß die im Speicher (3) nicht speicherbare thermische Energie der Solarflüssigkeit dem Restwärmekraftwerk (24) zuführbar ist.

## Claims

1. A solar energy plant for installation on or in buildings, with a solar thermal collector (2), which can be installed on the building, e.g. on the roof of a building, and by means of which solar radiation can be converted into the thermal energy of a solar liquid, a reservoir (3), which is connected to the solar thermal collector (2) by means of a fluid circuit (7, 8), and by means of which loads in the building, e.g. a heating plant (6), a hot water supply (5), or the like, can be supplied with thermal energy stored in the solar fluid, and a residual heat powerplant (4), which is connected to the fluid circuit (7, 8), by means of which the solar thermal collector (2) and the reservoir (3) are connected, and by means of which thermal energy generated in the solar thermal collector (2) and which cannot be stored in the reservoir (3) can be utilised by cooling of the solar fluid, and which has a repeller generator (24) with a fan rotor (23), which is arranged above a section (14) of the residual heat powerplant (4), and which is connected on the input side to a three-way valve (12) arranged in a solar thermal supply line (7) of the fluid circuit (7, 8) and on the output side is connected to a three-way valve (13) arranged in a solar thermal return line (8) of the fluid circuit (7, 8), **characterised in that**, the section (14) of the residual heat powerplant (4) is designed as a harp section or meander section (14), **in that** the harp section or meander section (14) is arranged in a housing (16), in whose ceiling wall (18) is arranged an aperture, in or near that of the repeller generator (24), and has openings (17) in the housing, through which relatively cold air near the ground can be sucked into the housing (16) by virtue of the venturi effect, **in that** a chimney (20) or high-temperature pipe (20) adjoins onto the aperture (19) of the ceiling wall (18) of the housing (16) of the residual heat powerplant (4), and **in that** the fan rotor (23) of the repeller generator (24) is arranged in a funnel section (21) of the chimney (20) or high-temperature pipe (20) that tapers from the aperture (19) in the ceiling wall (18).

2. The solar energy plant according to claim 1, whose repeller generator (24) has an alternating current generator (26).

3. The solar energy plant according to claim 1 or 2, whose three-way valves (12, 13) can be adjusted and/or controlled such that the thermal energy of the solar fluid that cannot be stored in the reservoir (3) can be supplied to the residual heat powerplant (24).

## Revendications

1. Installation d'énergie solaire à installer par exemple sur, ou dans des bâtiments, avec un collecteur solaire thermique (2), lequel peut être installé sur des bâtiments, par exemple sur un toit de bâtiment, et à l'aide duquel un rayonnement solaire peut être converti en énergie thermique d'un fluide solaire, un réservoir de stockage (3), lequel est raccordé à l'aide d'un circuit de fluide (7, 8) au collecteur solaire thermique (2) et à l'aide duquel des consommateurs côté bâtiment, par exemple une installation de chauffage (6), une alimentation d'eau chaude (5) ou similaires, peuvent être alimentés en énergie thermique stockée dans du fluide solaire, et avec une centrale d'énergie thermique résiduelle (4), laquelle est raccordée au circuit de fluide (7, 8) à l'aide duquel le collecteur solaire thermique (2) et le réservoir de stockage (3) sont reliés, à l'aide de laquelle de l'énergie thermique produite dans le collecteur solaire thermique (2) et ne pouvant pas être stockée dans le réservoir de stockage (3) peut être utilisée en refroidissant le fluide solaire, et qui présente un générateur de répulsion (24) avec une roue de ventilation (23) qui est disposé au-dessus d'un tronçon (14) de la centrale d'énergie thermique résiduelle (4), lequel est raccordé du côté d'entrée à une soupape à trois voies (12) disposée dans une canalisation solaire thermique montante (7) du circuit de fluide (7, 8) et du côté de sortie, à une soupape à trois voies (13) disposée dans une canalisation solaire thermique descendante (8) du circuit de fluide (7, 8), **caractérisée en ce que** le tronçon (14) de la centrale d'énergie thermique résiduelle (4) est réalisé en tant que tronçon en éventail ou à méandres (14), **en ce que** le tronçon en éventail ou à méandres (14) est disposé dans un boîtier (16) dont la paroi supérieure (18) présente une traversée dans laquelle, ou près de laquelle est disposé le générateur de répulsion (24), et présente des ouvertures de boîtier (17) à travers lesquelles il est possible d'aspirer dans le boîtier (16) de l'air comparativement froid proche du sol du fait de l'effet Venturi, **en ce qu'**une cheminée (20) ou un tuyau pour températures élevées (20) est en jonction avec la traversée (19) de la paroi supérieure (18) du boîtier (16) de la centrale d'énergie thermique résiduelle (4), et **en ce que** la roue de ventilation (23) du générateur de répulsion (24) est disposée dans un tronçon en entonnoir (21) de la cheminée (20) ou du tuyau pour températures élevées (20) s'amenuisant à partir de la traversée (19) de la paroi supérieure (18).

2. Installation d'énergie solaire selon la revendication 1, dont le générateur de répulsion (24) présente un générateur de courant alternatif (26).

3. Installation d'énergie solaire selon la revendication 1 ou 2, dont les soupapes à trois voies (12, 13) peuvent être réglées ou régulées de manière à ce que l'énergie thermique du fluide solaire ne pouvant pas être stockée dans le réservoir de stockage (3) peut être amenée à la centrale d'énergie thermique résiduelle (24).
